# EUROPÄISCHE PATENTSCHRIFT

(11) **EP 1 596 617 B1**
(45) Veröffentlichungstag und Bekanntmachung des Hinweises auf die Patenterteilung: **23.11.2011**
(21) Anmeldenummer: 04011182.5
(22) Anmeldetag: 11.05.2004
(51) Int. Cl.: H04W 24/08

(54) **Verfahren und Vorrichtung zum Erstellen und Durchfuehren eines Testszenarios fuer eine reale Vermittlungsstation eines Mobilfunknetzwerks**
Method and apparatus for establishing and performing a test scenario for a real network controller of a mobile communications network
Procédé et dispositif pour établir et effectuer un scénario de test pour un contrôleur de reseau real d'un reseau de communications mobile

(43) Veröffentlichungstag der Anmeldung: 16.11.2005
(73) Patentinhaber: Tektronix International Sales GmbH, 8212 Neuhausen (CH)
(72) Erfinder: Schreiber, Max, 12163 Berlin (DE)
(74) Vertreter: Schurack, Eduard F.

(56) Entgegenhaltungen:
- EP-A- 0 848 567
- US-A1- 2003 100 299

## Beschreibung

### BESCHREIBUNG:

Die vorliegende Erfindung betrifft ein Verfahren und eine Vorrichtung zum Erstellen und Durchführen eines Testszenarios für eine reale Vermittlungsstation eines Mobilfunknetzwerks.

Wenngleich die vorliegende Erfindung der besseren Verständlichkeit wegen im Nachfolgenden am Beispiel eines UMTS-Netzes beschrieben werden wird, so lässt sich die Erfindung selbstverständlich auch bei Netzen eines anderen Standards, insbesondere Mobilfunknetzen zukünftiger Mobilfunkstandards anwenden, sofern sie dem obigen Gattungsbegriff genügen.

Weitere Informationen zu den im Nachfolgenden im Zusammenhang mit dem UMTS-Netz verwendeten Begriffen können beispielsweise den folgenden, über die Domain www.3GPP.org zu beziehenden Dokumenten entnommen werden: Das Dokument 3GPP TS 25.301 gibt einen Überblick über die Kanalbelegung bei einem UMTS-Netz. Die Dokumente 3GPP TS 25.427 und 3GPP TS 25.435 befassen sich mit dem Frame-Protokoll, das Dokument 3GPP TS 25.321 mit dem MAC, das Dokument 3GPP TS 25.322 mit der RLC, das Dokument 3GPP TS 25.331 mit dem RRC und schließlich das Dokument 3GPP TS 25.433 mit dem NBAP. Weitere Informationen zum ALCAP können der ITU-Richtlinie ITU Q.2630.2 entnommen werden.

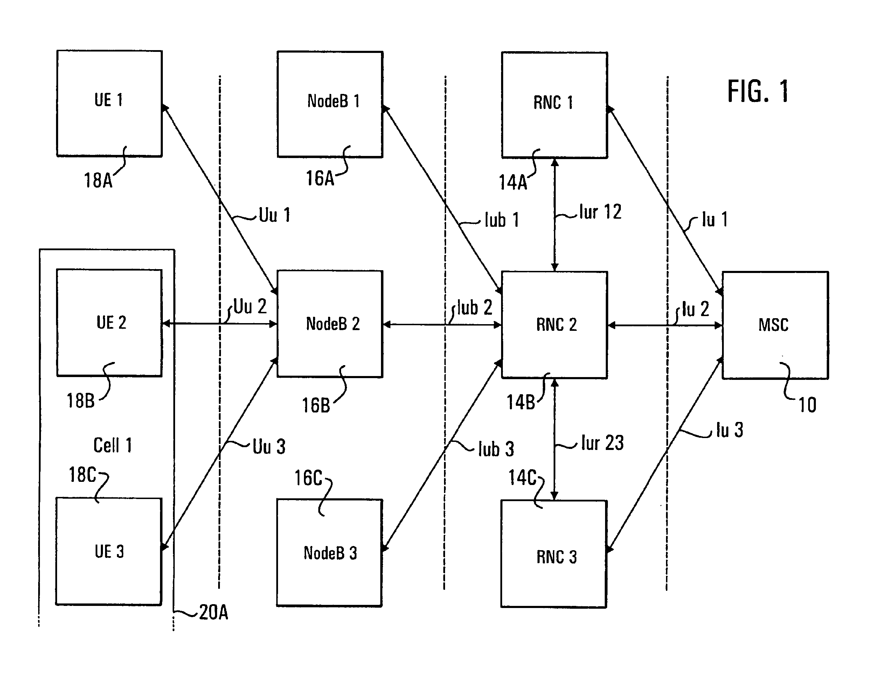

Figur 1 zeigt zum besseren Verständnis der der Erfindung zugrunde liegenden Problematik einen Ausschnitt eines UMTS-Netzes mit einem MSC 10, drei RNCs (Radio Network Controller) 14A, 14B, 14C, drei NodeBs 16A, 16B, 16C sowie drei mobile Einheiten (User Equipments) 18A, 18B, 18C, zum Beispiel Handys. Eine oder mehrere User Equipments 18A, 18B, 18C sind dabei einer Zelle zugeordnet. Vorliegend sind beispielhaft die User Equipments 18B, 18C der Zelle Cell 1 20A zugeordnet. Zwischen dem MSC 10 und jedem RNC 14 ist jeweils eine lu-Schnittstelle angeordnet, zwischen dem RNC 14B und jedem NodeB 16A, 16B, 16C jeweils eine lub-Schnittstelle, zwischen den RNCs 14A, 14B, 14C jeweils eine lur-Schnittstelle und zwischen den mobilen Einheiten 18A bis 18C und dem NodeB 16B jeweils eine Uu-Schnittstelle.

Zur weiteren Verbesserung der Verständlichkeit wird in der nachfolgenden ausführlichen Beschreibung davon ausgegangen, dass das erfindungsgemäße Verfahren beispielhaft an der lub-Schnittstelle ausgeführt wird, bzw. eine erfindungsgemäße Vorrichtung an dieser Stelle angeordnet ist. Die Funktionen eines NodeB lassen sich wie folgt zusammenfassen: Er bildet einen logischen Knoten, wie beispielsweise das BTS in einem GSM-Netz; er ist verantwortlich für das Senden und Empfangen in einer oder mehreren Funkzellen, sogenannten Cells, an/von User Equipments, insbesondere mobilen Einheiten; er terminiert die lub-Schnittstelle, d. h. den NBAP und den ALCAP; er dient der RF-Leistungsregelung und er bedient eine vorgebbare Anzahl von Funkzellen. Ein NodeB ist demnach eine Basisstation, an der mehrere Sende- und Empfangsantennen angeschlossen sind, wobei jeweils eine derartige Antennenkombination eine Funkzelle definiert. Ein RNC steuert die Verwendung und die Integrität der Funkressourcen; er terminiert RANAP, NBAP, ALCAP, RNSAP sowie RRC/RLC/MAC und er bildet das zentrale Element eines UMTS-Netzes. Ein RNC ist demnach eine Vermittlungsstation, an der mehrere derartige Basisstationen angeschlossen sind.

Die Funktionen der an der lub-Schnittstelle verwendeten Protokolle lassen sich wie folgt beschreiben: Inbetriebnahme und Wartung des NodeB, Management der lub-Transport-Ressourcen, Management der Radio-Ressourcen, Messungen der Qualität der Luftschnittstelle, zum auftretenden Datenvolumen und der Position von mobilen Einheiten. Es umfasst weiterhin den Transfer von betriebsrelevanten Systeminformationen an die mobilen Einheiten. Darüber hinaus sind an der lub-Schnittstelle folgende Funktionen realisiert: Traffic-Management für Common Channels, d. h. für Kanäle, die für alle am entsprechenden NodeB angeschlossenen Teilnehmer gelten, insbesondere Zugangssteuerungen, Regelung der Sendeleistung und Datenübertragung. Weiterhin übernimmt es die Funktionen des Traffic-Managements für Dedicated Channels, d. h. Kanäle, die einem bestimmten Teilnehmer zugeordnet sind, insbesondere Radio Link-Management, Radio Link Supervision, Channel Allocation/Deallocation, Regelung der Sendeleistung sowie Datenübertragung.

Wenn nun beispielsweise von einer lub-Schnittstelle aus ein realer RNC getestet werden soll, müssen die Netzwerkelemente, die von der jeweiligen lub-Schnittstelle nach außen, d. h. die NodeBs, die Cells und die User Equipments, oder mit anderen Worten die Netzwerktopologie, die an einen RNC in Richtung zum Netzwerkrand angeschlossen ist, konfiguriert werden.

Will man beispielsweise eine hohe Belastung monitoren oder für einen Test eine hohe Belastung (mittels Simulation) erzeugen, so müssen die entsprechenden Einheiten möglichst bis an ihre jeweilige Kapazitätsgrenze belastet werden: Ein RNC kann etwa 1.000 NodeBs zugeordnet sein, jeder NodeB derzeit bis zu 24 Zellen und jede Zelle kann wiederum bis zu 512 User Equipments umfassen. Es ist offensichtlich, dass eine derartige Konfiguration von Hand mühevoll ist. Modifikationen bestimmter Parameter, beispielsweise die Bewegung eines User Equipments von einer Zelle in eine andere, die Variation der Sendeleistung eines NodeB etc., wie sie in der Praxis auftreten, lassen sich in der Konfiguration mit vertretbarem Aufwand gar nicht berücksichtigen. Mit den aus dem Stand der Technik bekannten Methoden lässt sich daher nur eine begrenzte Aussage über die Funktion, insbesondere die Belastbarkeit eines RNC treffen.

In diesem Zusammenhang sei auf die EP 0 848 567 A1 verwiesen, die ein Verfahren und eine Vorrichtung zum Monitoren eines Mobilfunknetzwerks offenbart. Die logische und physische Topologie eines Mobilfunksystems wird durch Monitoren von eine Kommunikationsschnittstelle des Systems passierenden Nachrichten ermittelt. Obwohl diese Nachrichten keine einmalige systemweite Adressinformation enthalten, kann die Topologie des Netzwerks im Laufe der Zeit dadurch bestimmt werden, dass gemeinsame Informationen, die in verschiedenen Nachrichten auftreten, in Beziehung zueinander gesetzt werden. Insbesondere beschreibt diese Druckschrift ein Verfahren, bei dem ein Zusammenhang zwischen TRX-Funkelementen und anderen Netzwerkeinheiten in einem GSM-Mobilfunknetz ermittelt wird, indem über Abis und A-Schnittstellen gesendete Nachrichten gemonitort werden.

Ferner sei noch auf die US 2003/0100299 A1 verwiesen, die ein Verfahren und ein System zum Testen eines digitalen Mobilfunknetzwerks, beispielsweise eines GPRS-oder 3G-Netzwerks offenbart, bei dem mittels eines unmodifizierten Test-Mobiltelefons, das an einen Computer angeschlossen ist, Testverkehr erzeugt wird und mittels des Computers ein mit der Antwort des Netzwerks auf den Testverkehr zusammenhängender Parameter gemessen wird. Die von dem Computer gemachten Messungen werden in den Testverkehr kodiert, um einen Datenstrom innerhalb des Mobilfunknetzwerks zu erzeugen, der Testverkehr, Messungen hinsichtlich des Testverkehrs und Signalübertragung hinsichtlich des Testverkehrs enthält, wobei dieser Datenstrom an Punkten innerhalb des Netzwerks erfasst und analysiert werden kann, um die Funktion des Netzwerks dynamisch zu erforschen, während der Testverkehr auf dem Netzwerk übertragen wird.

Der vorliegenden Erfindung liegt deshalb die Aufgabe zugrunde, das eingangs genannte Verfahren bzw. die eingangs genannte Vorrichtung so zu verbessern, dass das Erstellen und das Durchführen eines Testszenarios für eine reale Vermittlungsstation eines Mobilfunknetzes erleichtert wird. Darüber hinaus soll die Möglichkeit geschaffen werden, Tests durchzuführen, die dichter am tatsächlichen, praktischen Verhalten eines Netzwerks angesiedelt sind als die aus dem Stand der Technik bekannte Vorgehensweise.

Diese Aufgabe wird gelöst durch ein Verfahren mit den Merkmalen von Patentanspruch 1 sowie durch eine Vorrichtung mit den Merkmalen von Patentanspruch 13.

Der vorliegenden Erfindung liegt die Erkenntnis zugrunde, dass einem Benutzer die Konfiguration der Netzwerktopologie erleichtert werden kann, wenn dazu Signale eines realen Netzwerks ausgewertet werden. Vorliegend wird zu diesem Zweck die auf mindestens einem der Kanäle zwischen dem ersten und dem zweiten Knoten übertragene Signalisierungsinformation ausgewertet. Während im Stand der Technik die Konfiguration von Hand vorgenommen werden musste, lässt sich auf der Basis der vorliegenden Erfindung durch Auswertung der Signalisierungsinformation eine automatische Konfiguration des Mobilfunknetzwerks erreichen. Am Beispiel des UMTS-Netzwerks wird insbesondere die Signalisierungsinformation in dem NBAP, dem RRC und der NAS-Schicht ausgewertet.

Die Erfindung basiert letztendlich auf der Idee, in geschickter Weise Daten zu sammeln und auszuwerten, die üblicherweise an User Equipments gesendet werden, um diese zu steuern, und diese Daten dann zum Ermitteln mindestens eines Topologieparameters, insbesondere zum Ermitteln der Netzwerktopologie zu verwenden.

Die vorliegende Erfindung ermöglicht daher - am vorliegenden Beispiel - die Vereinfachung eines Tests eines oder mehrerer RNCs eines UMTS-Netzwerks. Während im Stand der Technik Benutzer gewöhnlich eine komplizierte Konfigurationsprozedur vor dem Beginn des aktuellen Tests durchlaufen mussten, werden bei der vorliegenden Erfindung die Konfigurationsparameter aus der Signalisierungsinformation gelernt. Insbesondere muss für die Simulation von mobilen Einheiten, die sich in dem Mobilfunknetzwerk bewegen, die Netzwerktopologie bekannt sein. Diese Information wird im RNC konfiguriert. Bei der vorliegenden Erfindung wird diese Information durch eine erfindungsgemäße Vorrichtung aus der Signalisierungsinformation zwischen den NodeBs und den RNCs mit äußerst begrenztem Konfigurationsaufwand extrahiert.

Die vorliegende Erfindung lässt sich jedoch nicht nur für Testzwecke, sondern auch für Monitoringzwecke einsetzen, bei denen beispielsweise die Netzwerktopologie angezeigt wird und innerhalb der Topologie die Positionen der einzelnen Einheiten zusammen mit ihrer Last und ihren Interferenzen bei der Luftschnittstellenübertragung. Die Information, die benötigt wird, um einen Überblick über den gegenwärtigen Status eines Mobilfunknetzwerks zu bieten, wie beispielsweise Radio Interferenz Messungen, die verfügbare Bandbreite und die Erreichbarkeit von Zellen können aus den RRC- und NBAP-Measurement-Messages entnommen werden.

Bei Mobilfunknetzwerken, bei denen zwischen dem ersten und dem zweiten Knoten über mehrere Kanäle verschiedenartige Informationen übertragen werden, beispielsweise Informationen zwischen Knoten des Übertragungssystems, Informationen, die an mehrere Teilnehmer gerichtet sind, sowie Informationen, die an nur einen bestimmten Teilnehmer gerichtet sind, wobei sich die Informationen in Nutzinformationen sowie Managementinformationen, welche Signalisierungsinformationen einschließen, aufteilen, besteht für Monitorgeräte oder Protokolltester oder dergleichen, denen nur eine bestimmte Schnittstelle in einem derartigen Mobilfunknetz zugänglich ist, nun das Problem, dass sie aus einer bereits aufgebauten Übertragung herausfinden müssen, wie die einzelnen Kanäle belegt sind, um eine Entschlüsselung und damit eine Weiterverarbeitung der übertragenen Daten zu ermöglichen. Diesem Problem wird dadurch begegnet, dass noch vor dem Schritt des Auswertens der auf mindestens einem der Kanäle übertragenen Signalisierungsinformation folgender Schritt ausgeführt wird: Auffinden des mindestens einen Kanals, auf dem die Signalisierungsinformation übertragen wird, insbesondere durch Auswertung der auf den Kanälen übertragenen Daten. Hierbei ist anzumerken, dass NBAP- und ALCAP-Kanäle (Protokolle zwischen NodeB und RNC) vorkonfiguriert werden müssen. RRC-Kanäle (Protokoll zwischen UE und RNC) werden im NBAP und ALCAP signalisiert und können entsprechend dynamisch geöffnet werden. Insofern findet beim UMTS-Netz das Öffnen eines Kanals durch Auswertung der auf ihm übertragenen Daten nur beim RRC statt. Zum Auffinden des mindestens einen Kanals lässt sich besonders bevorzugt das in der europäischen Patentanmeldung Nr. 03 017 895.8, veröffentlicht als EP 1 505 845 A1, derselben Anmelderin wie die vorliegende Erfindung beschriebene Verfahren zum Ermitteln mindestens eines Übertragungsparameters einsetzen.

Bevorzugt ist dem ersten Knoten, beispielsweise beim UMTS-Netz, eine Vielzahl von Zellen zugeordnet, wobei jede Zelle ausgelegt, mit mindestens einer mobilen Einheit in Funkkontakt zu treten, und wobei die Signalisierungsinformation Information für den ersten Knoten und/oder für eine mobile Einheit zu den Zellen enthält. Hierbei kann die Information an die mobile Einheit gerichtet sein und Angaben umfassen, welche Zellen der Zelle, der die mobile Einheit gegenwärtig zugeordnet ist, benachbart sind. Aus dieser Information lässt sich die Position mindestens einer Zelle innerhalb des Mobilfunknetzwerks ableiten. Bevorzugt, beispielsweise beim Test eines RNCs eines UMTS-Netzwerks, wird die Position aller Zellen ermittelt, die dem zu testenden RNC zugeordnet sind.

Bevorzugt umfasst die Information Kodierinformation und/oder Frequenzinformation betreffend mindestens eine der gegenwärtig der mobilen Einheit zugeordneten Zelle benachbarte Zelle.

In einem besonders bevorzugten Ausführungsbeispiel handelt es sich bei dem Mobilfunknetz um ein UMTS-Netz, der zweite Knoten ist ein RNC-Knoten, der erste ein NodeB, die Schnittstelle eine lub-Schnittstelle und die Signalisierungsinformation das NBAP System Information Update. Hierbei ist in erster Linie die Information in den System Information Blocks SIB11 und/oder SIB 12 enthalten. Diese Nachrichten werden gewöhnlich vom RNC an den NodeB gesendet, von wo sie weiter an die mobilen Einheiten übertragen werden. Der SIB 11 bzw. der SIB 12 dienen den mobilen Einheiten als Steuerinformation von Messvorgängen. Jede Nachricht ist für genau eine spezifische Zelle gültig.

Die Blöcke SIB 11 und SIB 12 enthalten die Primary Scrambling Codes und Frequenzinformation der benachbarten Intra- und Inter-Frequency-Zellen, wodurch diese eindeutig identifiziert werden können. Dadurch kann das Testequipment die Position jeder Zelle in dem Netzwerk ermitteln. Intra Frequency Zellen bedeutet, dass mehrere Zellen auf derselben Frequenz senden, sich jedoch durch die Primary Scrambling Codes unterscheiden, wohingegen Inter Frequency Zellen auf unterschiedlichen Frequenzen senden.

Bevorzugt wird die ermittelte Topologie dynamisch aktualisiert. Dies wird bei dem erfindungsgemäßen Verfahren auf einfache Art und Weise berücksichtigt, da ein RNC neue Zellen kreieren kann oder existierende Zellen löschen kann, so dass unter dynamischer Auswertung der Signalisierungsinformation ein kontinuierliches Updaten der Netzwerktopologie bewirkt werden kann. Für die dynamische Aktualisierung werden bevorzugt die RRC-Measurement-Control-Messages und/oder die NBAP-System-Information-Update-Messages ausgewertet.

Neben der Position einer Zelle im Netzwerk können auch andere topologierelevante Informationen aus der zwischen den Knoten übertragenen Information gelernt werden, beispielsweise der UTRAN Registration Area Identifier (URA), insbesondere aus dem System Information Block SIB2, Routing Area Codes (RAC), insbesondere aus den NAS Layer Messages, Location Area Codes (LAC), insbesondere aus den NAS Layer Messages, Mobile Network Codes (MNC), insbesondere aus dem Master Information Block (MIB) und Mobile Country Codes (MCC), insbesondere ebenfalls aus dem Master Information Block. Der Master Information Block wird in derselben NBAP System Information Message übertragen wie die SIBs.

Eine Zelle ist eindeutig definiert durch ihre Local-Cell-Id (vorgegeben durch NodeB und damit auch nur eindeutig innerhalb eines NodeB), durch die C-Id (vorgegeben durch den RNC - damit eindeutig innerhalb eines RNC) und durch den Primary Scrambling Code (Codierung auf der Luftschnittstelle). Die benachbarten Zellen werden durch ihre Primary Scrambling Codes gekennzeichnet.

Bei bevorzugten Ausführungsformen des erfindungsgemäßen Verfahrens werden zumindest die Position der Zellen und/oder die URA-Identifier während der Netzwerk Startup Time ermittelt. Dabei werden für jede Zelle die benachbarten Cell Identifier in unterschiedlichen Listen gespeichert, die sich durch die Mobilitätsprozeduren unterscheiden, die ausgeführt werden sollen. Auf diese Art und Weise muss ein Mobilitätsgenerator sich nur die Datenstruktur der Zelle ansehen, der die mobile Einheit momentan zugeordnet ist. Eine Liste von benachbarten Cell Identifiern muss in Abhängigkeit der gewünschten Mobilitätsprozedur gewählt werden. Aus dieser Liste kann eine neue Zelle gewählt werden, zu der die mobile Einheit auf Random-Basis (Trial and Error Mode) bewegt werden soll oder in Abhängigkeit der freien Bandbreite (Save Mode). Auf diese Art und Weise wird die Informationsverarbeitung während der Simulationslaufzeit auf ein Minimum begrenzt. Zur Laufzeit des Netzes werden weiterreichende Informationen gesammelt. Insbesondere können zum Beispiel LAC und RAC erst während der Laufzeit ermittelt werden, da ja vorher keine NAS-Nachrichten existieren.

Wie erwähnt, wird auf der Basis des mindestens einen ermittelten Topologieparameters ein Testszenario erstellt und ausgeführt. Da die Netzwerktopologieinformation verschiedene Abstraktionsschichten umfasst, die während der Mobilitätssimulation der mobilen Einheiten unterschieden werden müssen, muss der Mobilitätsgenerator in Abhängigkeit der auszuführenden Mobilitätsprozedur eine benachbarte Zelle finden, die zu einer unterschiedlichen Location Area, Routing Area, URA, NodeB, RNC oder Frequenz gehört.

Ein einfacher Ansatz zur Speicherung der Netzwerktopologie besteht darin, für jede Zelle ihre Location Area, Routing Area, ihre bis zu acht verschiedenen URA Identifier, ihren NodeB, ihren RNC und ihre benachbarten Intra und Inter Frequency Cell Identifiers in einer Tabellenform abzulegen. Auf diese Art und Weise muss jedoch die Netzwerktopologieinformation während der Laufzeit des Tests ausgewertet werden.

Im Rahmen des Testszenarios kann bevorzugt die Anzahl der einer bestimmten Zelle zugeordneten mobilen Einheiten und/oder die Bandbreite von mobilen Einheiten und/oder die Bewegungsgeschwindigkeit einzelner oder mehrerer mobiler Einheiten und/oder die Sendeleistung vorgebbarer Zellen und/oder die Sendeleistung mindestens einer mobilen Einheit variiert werden.

Die Vorrichtung zur Durchführung des erfindungsgemäßen Verfahrens, für die selbstverständlich dieselben Vorteile gelten wie im Zusammenhang mit den bevorzugten Ausführungsformen des erfindungsgemäßen Verfahrens beschrieben, kann einen Call-Generator umfassen, der für die Simulation von Aktivitäten der Benutzer mobiler Einheiten, wie beispielsweise das Anschalten eines Handys, die Auslösung von Anrufen zu Sprach- oder Datenübertragung und deren Beendigung verantwortlich ist. Daher benötigt der Call-Generator die RAI (Routing Area Identifier) oder LAI (Location Area Identifier), um irgendwelche Verbindungen der Steuerungs- oder Benutzerebene einzurichten.

Der Mobilitätsgenerator simuliert alle Mobilitätsaktionen und benötigt daher neben den bereits erwähnten RAI und LAI die benachbarten URAs (UTRAN Registration Area Identifier), die benachbarten Intra- und Interfrequenz-Zellen und die Information, zu welchem NodeB und RNC jede Zelle gehört. Dabei kann der Mobilitätsgenerator in verschiedenen Modi arbeiten: In einem Trial-and-Error-Modus wird ermöglicht, dass sich mobile Einheiten in Zellen bewegen, deren Bandbreite zu klein sein könnte, so dass Fehler in der Mobilitätsprozedur möglich werden. In einem Savemodus bewegt der Mobilitätsgenerator die mobilen Einheiten nur in Zellen mit ausreichend Bandbreite. Dies macht zum Beispiel für Tests Sinn, in denen die Gesamtlast der Userplane auf einem bestimmten Level gehalten werden soll.

Weitere vorteilhafte Ausführungsformen ergeben sich aus den Unteransprüchen.

Im Nachfolgenden wird nunmehr ein Ausführungsbeispiel der Erfindung unter Bezugnahme auf die beigefügten Zeichnungen näher beschrieben. Es zeigen:
- Figur 1: einen Ausschnitt aus einem UMTS-Netz mit verschiedenartigen Knoten und Schnittstellen;
- Figur 2: in schematischer zweidimensionaler Darstellung unterschiedliche Topo- logieparameter des Mobilfunknetzwerks von Figur 1; und
- Figur 3: ein Signalflussdiagramm einer Ausführungsform des erfindungsgemäßen Verfahrens.

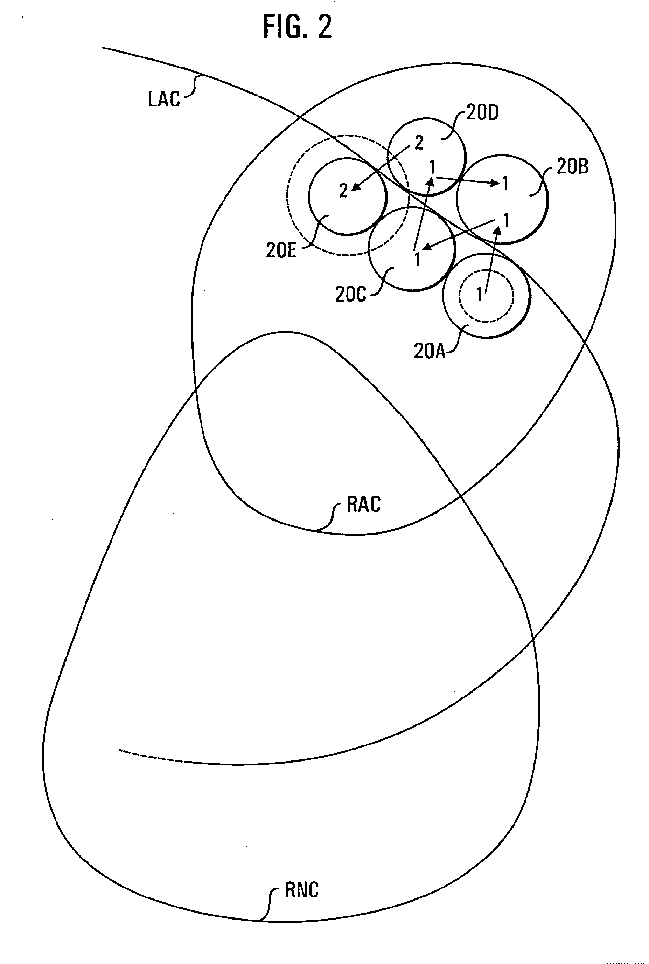

Figur 2 zeigt beispielhaft mehrere Zellen 20A bis 20E eines Mobilfunksystems in ihrer räumlichen Anordnung. Ein beispielhaft eingezeichneter Benutzer 1 bewegt sich von der Zuständigkeit der Zelle 20A über die der Zellen 20B, 20C und 20D zurück in die Zuständigkeit der Zelle 20B. Ein Benutzer 2 bewegt sich von der Zuständigkeit der Zelle 20D in die der Zelle 20E. Beispielhaft ist für die Zellen 20A und 20E eingezeichnet, wie sich eine Erniedrigung bzw. eine Erhöhung der entsprechenden Sendeleistung auswirkt. Eingezeichnet ist weiterhin der RAC, zu dem die Zellen 20A bis 20E gehören, der für die Zellen 20A, 20D und 20E zuständige LAC sowie ein RNC. Der Übersichtlichkeit halber sind die anderen Zellen in dieses Schema nicht eingetragen.

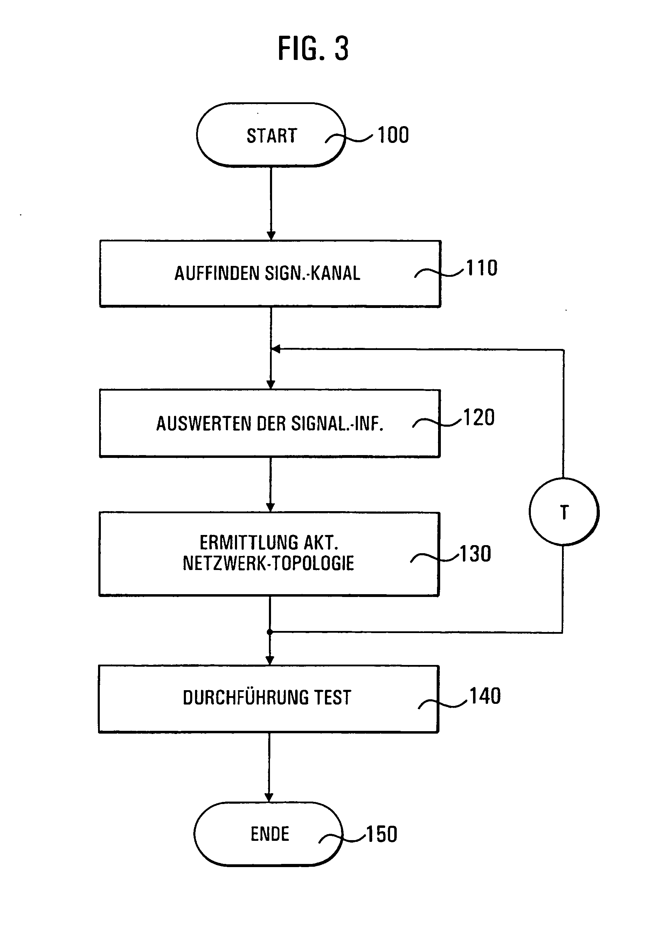

Figur 3 zeigt beispielhaft ein Signalflussdiagramm einer bevorzugten Ausführungsform der Erfindung, bei dem das Verfahren im Schritt 100 startet. Im Schritt 110 wird der Kanal ermittelt, von dem die Signalisierungsinformation übertragen wird, wobei diese anschließend im Schritt 120 ausgewertet wird. Aus den den jeweiligen Zellen zugeordneten Frequenzen und Scramblingcodes lässt sich die aktuelle Netzwerktopologie im Schritt 130 ermitteln. Über einen Timer T kann die Netzwerktopologie dynamisch aktualisiert werden, wobei hier in vorgebbarem zeitlichem Abstand die Schritte 120 und 130 wiederholt werden. Die jeweiligen Ergebnisse werden im Schritt 140 einer Einheit zur Durchführung eines vom Benutzer spezifizierten Tests weitergeleitet. Im Schritt 150 endet das erfindungsgemäße Verfahren.

Durch die Durchführung des erfindungsgemäßen Verfahrens lässt sich die räumliche An- bzw. Zuordnung der einzelnen Elemente eines Mobilfunknetzwerks und der Teilnehmer an diesem Netzwerk ermitteln und zur Konfiguration eines Testgeräts verwenden.

Der RNC teilt beispielsweise einem Handy durch Angabe der entsprechenden Scramblingcodes die der gegenwärtig von dem Handy benutzten Zelle benachbarten Zellen mit. Dadurch wird der Rechenaufwand im Handy reduziert. Weiterhin teilt der RNC einem Handy mit, zu welcher Zelle es infolge seiner Bewegung oder anderer hinzugekommener Teilnehmer wechseln soll.

Durch die vorliegende Erfindung wird demnach die Ausführung von Tests unter Berücksichtigung eines physikalisch sinnvollen Bewegens von Handys innerhalb der Zellen einer Netzwerktopologie, d. h. eine Bewegung nur über benachbarte Zellen, ermöglicht. Wenn sich beispielsweise eine mobile Einheit aus dem Zuständigkeitsbereich einer Zelle hinausbewegt, kann der zuständige RNC entweder die Sendeleistung der Ausgangsquelle erhöhen oder das Handy in die Zuständigkeit einer neuen Zelle übergeben.

Durch die vorliegende Erfindung werden einem Netzwerkoperator Informationen bereitgestellt, wie beispielsweise die Zellen angeordnet sind, wo sich die mobilen Einheiten befinden, der Radius der entsprechenden Zellen sowie die jeweiligen Zellensendeleistung.

## Patentansprüche

1. Verfahren zum Erstellen und Durchführen eines Testszenarios für eine reale Vermittlungsstation (14) eines Mobilfunknetzes, folgende Schritte umfassend:
a) Konfiguration eines simulierten Mobilfunknetzes für Testzwecke durch Ermitteln mindestens eines Konfigurationsparameters eines realen Mobilfunknetzes an einer zwischen einem ersten (16) und einem zweiten Knoten (14) des realen Mobilfunknetzes angeordneten Schnittstelle (lub), wobei zwischen dem ersten (16) und dem zweiten Knoten (14) mehrere Kanäle bestehen, wobei der erste Knoten (16) eine Basisstation darstellt, an der mehrere Sende- und Empfangsantennen angeschlossen sind, wobei der zweite Knoten (14) eine Vermittlungsstation darstellt, an der mehrere derartige Basisstationen (16) angeschlossen sind, durch:
a1) Auffinden mindestens einen Kanals, auf dem Signalisierungsinformation übertragen wird durch Auswertung der auf dem mindestens einen Kanal übertragenen Daten (Schritt 110);
a2) Auswerten der auf dem mindestens einen, in Schritt a1) aufgefundenen Kanal übertragenen Signalisierungsinformation (Schritt 120);
a3) Ermitteln mindestens eines Konfigurationsparameters des realen Mobilfunknetzes zur Konfiguration des Mobilfunknetzes für Testzwecke von der Schnittstelle (lub) ausgehend Basisstationen (16) und mobile Einheiten (18) umfassend durch Extrahieren des mindestens einen Konfigurationsparameters aus der Signalisierungsinformation (Schritt 130);
b) Testen eines realen zweiten Knotens (14) durch Anschließen des in Schritt a3) in einem Testgerät konfigurierten simulierten Mobilfunknetzes für Testzwecke an den realen zweiten Knoten (14) (Schritt 140).

2. Verfahren nach Anspruch 1,
**dadurch gekennzeichnet,**
**dass** dem ersten Knoten (16) eine Vielzahl von Zellen (20) zugeordnet ist, wobei jede Zelle (20) ausgelegt ist, mit mindestens einer mobilen Einheit (18) in Funkkontakt zu treten, und wobei die Signalisierungsinformation Information für den ersten Knoten (16) und/oder für eine mobile Einheit (18) zu den Zellen (20) enthält.

3. Verfahren nach Anspruch 2,
**dadurch gekennzeichnet,**
**dass** die Information an die mobile Einheit (18) gerichtet ist und Angaben umfasst, welche Zellen der Zelle (20), der die mobile Einheit (18) gegenwärtig zugeordnet ist, benachbart sind.

4. Verfahren nach Anspruch 3,
**dadurch gekennzeichnet,**
**dass** aus der Information, welche Zellen (20) benachbart sind, die Position mindestens einer Zelle (20) innerhalb des Mobilfunknetzwerks abgeleitet wird.

5. Verfahren nach Anspruch 3 oder 4,
**dadurch gekennzeichnet,**
**dass** die Information Kodierinformation und/oder Frequenzinformation betreffend mindestens eine der gegenwärtig der mobilen Einheit (18) zugeordneten Zelle (20A) benachbarte Zelle (20B, 20C) umfasst.

6. Verfahren nach einem der vorhergehenden Ansprüche,
**dadurch gekennzeichnet,**
**dass** das Mobilfunknetz ein UMTS-Netz ist, der zweite Knoten (14) ein RNC-Knoten, der erste Knoten (16) ein Node-B, die Schnittstelle (lub) eine lub-Schnittstelle und die Signalisierungsinformation das NBAP System Information Update.

7. Verfahren nach Anspruch 6,
**dadurch gekennzeichnet,**
**dass** die Information in den System Information Blocks SIB11 und/oder SIB12 enthalten ist.

8. Verfahren nach einem der vorhergehenden Ansprüche,
**dadurch gekennzeichnet,**
**dass** die ermittelte Konfiguration dynamisch aktualisiert wird.

9. Verfahren nach Anspruch 8,
**dadurch gekennzeichnet,**
**dass** für die dynamische Aktualisierung die RRC-Measurement Control Messages und/oder die NBAP System Information Update Messages ausgewertet werden.

10. Verfahren nach einem der vorhergehenden Ansprüche,
**dadurch gekennzeichnet,**
**dass** durch Auswertung der Signalisierungsinformation mindestens einer der folgenden Konfigurationsparameter ermittelt wird, insbesondere um die Zugehörigkeit einer Zelle (20) zu mindestens einer übergeordneten Einheit zu bestimmen:
- UTRAN Registration Area Identifier (URA), insbesondere aus dem System Information Block SIB2;
- Routing Area Codes (RAC), insbesondere aus den NAS Layer Messages;
- Location Area Codes (LAC), insbesondere aus den NAS Layer Messages;
- Mobile Network Codes (MNC), insbesondere aus dem Master Information Block (MIB); und
- Mobile Country Codes (MCC), insbesondere aus dem Master Information Block (MIB).

11. Verfahren nach einem der vorhergehenden Ansprüche,
**dadurch gekennzeichnet,**
**dass** zumindest die Position der Zellen (20) zueinander und/oder die URA-Identifier während der Netzwerk Startup Time gelernt werden.

12. Verfahren nach einem der vorhergehenden Ansprüche,
**dadurch gekennzeichnet,**
**dass** im Rahmen des Testszenarios die Anzahl der einer bestimmten Zelle (20) zugeordneten mobilen Einheiten (18) und/oder die Bandbreite mindestens einer mobilen Einheit (18) und/oder die Bewegungsgeschwindigkeit einzelner oder mehrerer mobiler Einheiten (18) und/oder die Sendeleistung vorgebbarer Zellen (20) und/oder die Sendeleistung mindestens einer mobilen Einheit (18) variiert wird.

13. Vorrichtung zur Durchführung des Verfahrens nach einem der vorhergehenden Ansprüche.

## Claims

1. Method for establishing and performing a test scenario for a real switching station (14) of a mobile network, comprising the following steps:
a) configuration of a simulated mobile network for testing purposes by determining at least one configuration parameter of a real mobile network at an interface (lub) arranged between a first (16) and a second (14) node of the real mobile network, wherein there exist between the first (16) and the second (14) node a plurality of channels, wherein the first node (16) is a base station to which a plurality of transmitter and receiver antennas are connected, wherein the second node (14) is a switching station to which a plurality of such base stations (16) are connected, by means of:
a1) identifying at least one channel on which signalling information is transmitted by analysing the data transmitted on the at least one channel (step 110);
a2) analysing the signalling information transmitted on the at least one channel identified in step a1) (step 120);
a3) determining at least one configuration parameter of the real mobile network for configuring the mobile network for testing purposes, starting from the interface (lub), comprising base stations (16) and mobile units (18), by extracting the at least one configuration parameter from the signalling information (step 130);
b) testing of a real second node (14) by connecting the simulated mobile network configured in step a3) in a test device to the real second node (14) for testing purposes (step 140).

2. Method according to claim 1,
**characterised in that**
there is allocated to the first node (16) a plurality of cells (20), each cell (20) being designed to enter into radio contact with at least one mobile unit (18), and the signalling information containing information for the first node (16) and/or for a mobile unit (18) relating to the cells (20).

3. Method according to claim 2,
**characterised in that**
the information is directed towards the mobile unit (18) and comprises details on which cells neighbour the cell (20) to which the mobile unit (18) is currently allocated.

4. Method according to claim 3,
**characterised in that**
from the information on which cells (20) neighbour each other there is derived the position of at least one cell (20) within the mobile network.

5. Method according to claim 3 or 4,
**characterised in that**
the information comprises coding information and/or frequency information relating to at least one of the cells (20B, 20C) neighbouring the cell (20A) currently allocated to the mobile unit (18).

6. Method according to one of the above claims,
**characterised in that**
the mobile network is a UMTS network, the second node (14) is an RNC node, the first node (16) is a Node B, the interface (lub) is a lub interface and the signalling information is the NBAP system information update.

7. Method according to claim 6,
**characterised in that**
the information is contained in the System Information Blocks SIB11 and/or SIB12.

8. Method according to one of the above claims,
**characterised in that**
the configuration determined is updated dynamically.

9. Method according to claim 8,
**characterised in that**
the RRC Measurement Control Messages and/or the NBAP System Information Update Messages are analysed for the dynamic updating.

10. Method according to one of the above claims,
**characterised in that**
by analysing the signalling information there is determined at least one of the following configuration parameters, particularly in order to determine the affiliation of a cell (20) to at least one higher-level unit:
- UTRAN Registration Area Identifier (URA), particularly from the System Information Block SIB2;
- Routing Area Codes (RAC), particularly from the NAS Layer Messages;
- Location Area Codes (LAC), particularly from the NAS Layer Messages;
- Mobile Network Codes (MNC), particularly from the Master Information Block (MIB); and
- Mobile Country Codes (MCC), particularly from the Master Information Block (MIB).

11. Method according to one of the above claims,
**characterised in that**
at least the positions of the cells (20) with respect to each other and/or the URA identifiers are learned during the network start-up time.

12. Method according to one of the above claims,
**characterised in that**
as part of the test scenario the number of the mobile units (18) allocated to a particular cell (20) and/or the bandwidth of at least one mobile unit (18) and/or the speed of movement of individual or a plurality of mobile units (18) and/or the transmission capacity of predeterminable cells (20) and/or the transmission capacity of at least one mobile unit (18) is being varied.

13. Device for performing the method according to one of the above claims.

## Revendications

1. Procédé destiné à élaborer et réaliser un scénario de test pour une station de commutation réelle (14) d'un réseau de radiocommunication mobile, comprenant les étapes suivantes :
a) configuration d'un réseau de radiocommunication mobile simulé à des fins de test en déterminant au moins un paramètre de configuration d'un réseau de radiocommunication mobile réel sur une interface (lub) disposée entre un premier noeud (16) et un second noeud (14) du réseau de radiocommunication mobile réel, plusieurs voies existant entre le premier noeud (16) et le second noeud (14), le premier noeud (16) représentant une station de base, à laquelle sont connectées plusieurs antennes d'émission et de réception, le second noeud (14) représentant une station de commutation, à laquelle sont connectées plusieurs telles stations de base (16), par
a1) détection d'au moins une voie sur laquelle des informations de signalisation sont transmises en évaluant les données transmises sur l'au moins une voie (étape 110) ;
a2) évaluation des informations de signalisation transmises sur l'au moins une voie détectée à l'étape a1) (étape 120) ;
a3) détermination d'au moins un paramètre de configuration du réseau de radiocommunication mobile réel pour la configuration du réseau de radiocommunication mobile à des fins de test en partant de l'interface (lub), comprenant les stations de base (16) et les unités mobiles (18), par extraction de l'au moins un paramètre de configuration à partir des informations de signalisation (étape 130) ;
b) test d'un second noeud réel (14) par connexion du réseau de radiocommunication mobile simulé, configuré dans un appareil de test à l'étape a3), au second noeud réel (14) à des fins de test (étape 140).

2. Procédé selon la revendication 1,
**caractérisé en ce**
**qu'**une pluralité de cellules (20) sont affectées au premier noeud (16), chaque cellule (20) étant conçue pour entrer en contact radio avec au moins une unité mobile (18), et les informations de signalisation contenant des informations pour le premier noeud (16) et/ou pour une unité mobile (18) vers les cellules (20).

3. Procédé selon la revendication 2,
**caractérisé en ce**
**que** les informations sont destinées à l'unité mobile (18) et comprennent des indications signalant quelles cellules sont voisines à la cellule (20) qui est présentement affectée à l'unité mobile (18).

4. Procédé selon la revendication 3,
**caractérisé en ce**
**qu'**à partir des informations indiquant quelles cellules (20) sont voisines, la position d'au moins une cellule (20) à l'intérieur du réseau de radiocommunication mobile en est déduite.

5. Procédé selon la revendication 3 ou 4,
**caractérisé en ce**
**que** les informations comprennent des informations de codage et/ou des informations de fréquence concernant au moins une cellule (20B, 20C) voisine à la cellule (20A) affectée présentement à l'unité mobile (18).

6. Procédé selon l'une quelconque des revendications précédentes,
**caractérisé en ce**
**que** le réseau de radiocommunication mobile est un réseau UMTS, en ce que le second noeud (14) est un noeud RNC, en ce que le premier noeud (16) est un noeud B, en ce que l'interface (lub) est une interface lub et en ce que les informations de signalisation sont le NBAP System Information Update.

7. Procédé selon la revendication 6,
**caractérisé en ce**
**que** les informations sont contenues dans les System Information Blocs SIB11 et/ou SIB12.

8. Procédé selon l'une quelconque des revendications précédentes,
**caractérisé en ce**
**que** la configuration déterminée est mise à jour dynamiquement.

9. Procédé selon la revendication 8,
**caractérisé en ce**
**que** pour la mise à jour dynamique, les RRC Measurement Control Messages et/ou les NBAP System Information Update Messages sont évalués.

10. Procédé selon l'une quelconque des revendications précédentes,
**caractérisé en ce**
**qu'**en raison de l'évaluation des informations de signalisation, au moins un des paramètres de configuration suivants est déterminé, notamment afin de déterminer l'appartenance d'une cellule (20) à au moins une unité supérieure :
- UTRAN Registration Area Identifier (URA), notamment à partir du System Information Bloc SIB2 ;
- Routing Area Codes (RAC), notamment à partir des NAS Layer Messages ;
- Location Area Codes (LAC), notamment à partir des NAS Layer Messages ;
- Mobile Network Codes (MNC), notamment à partir du Master Information Bloc (MIB) ; et
- Mobile Country Codes (MCC), notamment à partir du Master Information Bloc (MIB).

11. Procédé selon l'une quelconque des revendications précédentes,
**caractérisé en ce**
**qu'**au moins la position des cellules (20) l'une par rapport à l'autre et/ou le URA Identifier sont appris pendant le temps de démarrage du réseau (Network Startup Time).

12. Procédé selon l'une quelconque des revendications précédentes,
**caractérisé en ce**
**que** dans le cadre du scénario de test, le nombre d'unités mobiles (18) affectées à une cellule déterminée (20) et/ou la largeur de bande d'au moins une unité mobile (18) et/ou la vitesse de déplacement d'unités mobiles (18) individuelles ou de plusieurs unités mobiles et/ou la puissance d'émission de cellules prédéfinies (20) et/ou la puissance d'émission d'au moins une unité mobile (18) sont variés.

13. Dispositif destiné à la réalisation du procédé selon l'une quelconque des revendications précédentes.
